# EUROPEAN PATENT SPECIFICATION

(11) **EP 2 557 013 B1**
(45) Date of publication and mention of the grant of the patent: **09.12.2020**
(21) Application number: 12179972.0
(22) Date of filing: 09.08.2012
(51) Int. Cl.: B61B 12/02

(54) **HAUL CABLE SUPPORT ROLLER**
STÜTZROLLE FÜR EINE SEILBAHN
ROULEMENT POUR UNE INSTALLATION À CÂBLE AÉRIEN

(30) Priority: 09.08.2011 IT MI20111522
(43) Date of publication of application: 13.02.2013
(73) Proprietor: LEITNER S.p.A., Vipiteno (BZ) (IT)
(72) Inventor: Erharter, Nikolaus, 39038 San Candido (IT)
(74) Representative: Bergadano, Mirko

(56) References cited:
- EP-A1- 1 277 637
- WO-A1-2008/145748
- CH-A- 376 725
- DE-A1- 19 816 327

## Description

The present invention relates to a cable transportation system haul cable support roller of the type disclosed in EP 1,277,637 and in DE 198 16 327 A1.

Cable transportation systems normally comprise a haul cable run along a given path; at least one transportation unit movable along the path and connectable to the haul cable by a coupling device; a supporting structure located along the path to support and guide the transportation unit; and at least one haul cable guide roller fitted to the supporting structure.

Cable transportation systems of the above type comprise both rail and suspended systems.

Both types produce vibration caused by the haul cable running over the support roller, and more specifically by the outer surface of the cable. Because the haul cable is composed of strands wound about the longitudinal axis of the cable, the outer surface of the cable, as opposed to being smooth, has a plurality of ridges and grooves equally spaced along the longitudinal axis of the cable. The haul cable is normally run at constant speed, and so vibrates the roller at constant frequency; and, given that the haul cable is normally supported on a plurality of rollers, the vibration produced is considerable and is transmitted from the roller to the normally metal supporting structure.

The vibration produced by the haul cable in turn produces noise, to such an extent as to prevent operation of cable transportation systems in certain, particularly urban, areas.

It is an object of the present invention to provide a haul cable support roller designed to eliminate the above drawback of the known art.

According to the present invention, there is provided a support roller for a cable transportation system haul cable, wherein the support roller comprises a hub extending about an axis of rotation; an outer ring extending about the hub and having a race for guiding the haul cable, wherein the race is defined by two lateral walls of outer ring, and by a ring of elastomer material enclosed between lateral walls; and an intermediate ring; whereby the intermediate ring is connected to the outer ring and the hub to allow the outer ring to rotate about the hub and the axis of rotation, and to allow the outer ring to move radially with respect to the hub in at least one radial direction, wherein the outer ring is connected in rotary manner to the intermediate ring, preferably with the interposition of at least one bearing, and the intermediate ring is connected to the hub to slide in the radial direction.

The outer ring, which is in direct contact with the haul cable, can thus move radially to follow the uneven profile of the haul cable and so reduce shock, vibration and noise.

The outer ring is connected in rotary manner to the intermediate ring, preferably with the interposition of at least one bearing, and the intermediate ring is connected to the hub to slide in the radial direction.

The support roller comprises at least one elastic device located between the hub and the intermediate ring to oppose movement of the outer ring, induced by the haul cable, in the radial direction.

In fact, part of the energy transmitted from the haul cable to the roller is dissipated and/or isolated by the elastic device to reduce shock.

In a preferred embodiment of the present invention, the hub and intermediate ring define a substantially closed chamber; said elastic device being housed inside said chamber.

In other words, the elastic device is protected from external agents such as rain, snow and ice, and can therefore function even in severe operating conditions.

In a preferred embodiment of the present invention, the elastic device comprises at least one helical spring extending in a radial direction with respect to the axis of rotation.

The elastic device preferably comprises a plurality of helical springs equally spaced about the axis of rotation.

This reduces the risk of the helical spring bending under tangential loads transmitted by the haul cable.

In another preferred embodiment of the present invention, the elastic device comprises at least one leaf spring positioned crosswise to a radial direction with respect to the axis of rotation; the elastic device preferably comprising two leaf springs on opposite sides of the hub.

The leaf spring provides for easier assembly, and reduces the risk of instability under combined stress.

In another preferred embodiment of the present invention, the elastic device comprises at least one block of elastomer material; the elastic device preferably comprising one annular block of elastomer material.

This also provides for easy assembly of the roller.

The hub comprises a guide, and the intermediate ring comprises a sliding member which slides along the guide.

This design prevents undesired axial movement of the intermediate ring with respect to the hub.

The guide preferably comprises two facing annular walls.

The facing annular walls have the advantage of forming the closed chamber; and the elastic device is located between the two annular walls.

The sliding member preferably comprises an annular body integral with the intermediate ring, and which extends between the annular walls.

In a preferred embodiment of the present invention, the free ends of the annular walls are located close to the intermediate ring in the radial direction, to prevent excessive radial movement.

Any severe stress transmitted from the haul cable to the outer ring produces no excessive movement of the outer ring, thus ensuring balanced support of the haul cable.

A number of non-limiting embodiments of the present invention will be described by way of example with reference to the accompanying drawings, in which:
Figure 1 shows a partly sectioned side view, with parts removed for clarity, of a haul cable support roller in accordance with the present invention;
Figure 2 shows a section, with parts removed for clarity, of the support roller along line II-II in Figure 1;
Figure 3 shows a partly sectioned side view, with parts removed for clarity, of a support roller in accordance with a variation of the present invention;
Figure 4 shows a section, with parts removed for clarity, of a support roller in accordance with a further variation of the present invention.

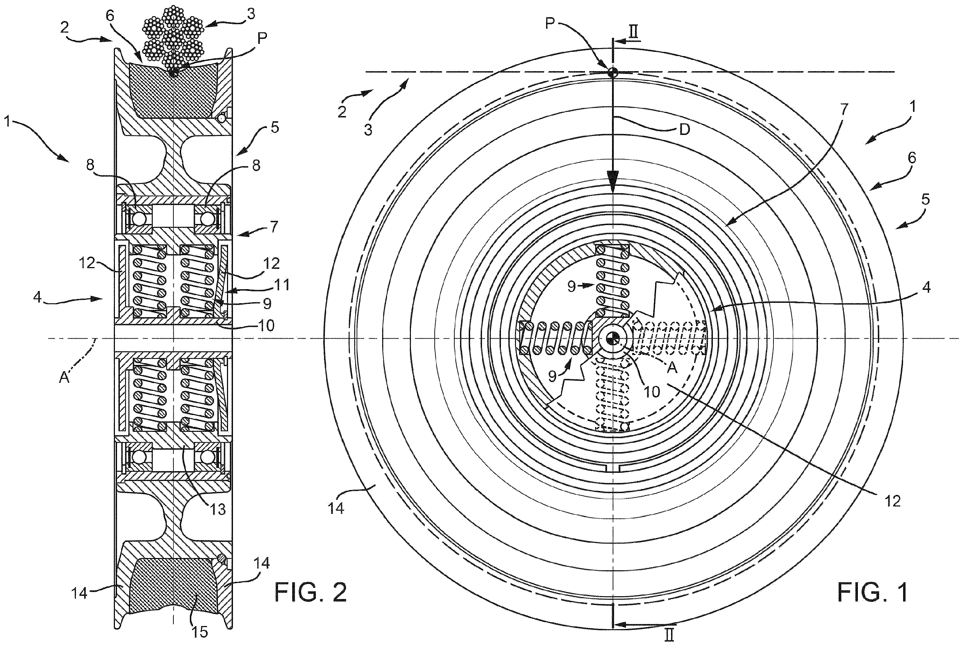

Number 1 in Figure 1 indicates a support roller for a haul cable 2 of a cable transportation system not shown in the drawings.

As shown in Figure 2, haul cable 2 comprises metal strands wound about the longitudinal axis of haul cable 2 to form a regular succession of ridges and grooves along the outer surface 3 of haul cable 2.

As shown in Figure 1, support roller 1 extends about an axis of rotation A, has a hypothetical point of contact P with haul cable 2, and comprises a hub 4; an outer ring 5 extending about hub 4 and having a race 6 for guiding haul cable 2; and an intermediate ring 7 located between hub 4 and outer ring 5 and connected to outer ring 5 and hub 4 to allow outer ring 5 to rotate about hub 4 and axis of rotation A, and to allow outer ring 5 to slide with respect to hub 4 in at least one radial direction D.

More specifically, outer ring 5 is connected in rotary manner to intermediate ring 7 with the interposition of at least one bearing 8 (Figure 2), and intermediate ring 7 is connected to hub 4 to slide in radial direction D. In the example shown in the drawings, outer ring 5 and intermediate ring 7 define two seats for two rolling bearings 8 (Figure 2).

Intermediate ring 7 is connected to hub 4 to slide in radial direction D, and at least one elastic device 9 is located between intermediate ring 7 and hub 4 to oppose movement of outer ring 5, induced by haul cable 2, in radial direction D.

Elastic device 9 preferably comprises a helical spring parallel to radial direction D, and, in the example shown, employs two side by side helical springs parallel to radial direction D.

In the preferred embodiment in Figure 1, elastic device 9 comprises a plurality of helical springs equally spaced about axis of rotation A. And the ends of the helical springs are housed in respective seats formed in hub 4 and intermediate ring 7.

With respect to the solution with one or more helical springs arranged in one direction, equally spaced helical springs about axis of rotation A have the advantage of preventing the helical springs from bending and so resulting in abnormal operation of roller 1.

Hub 4 and intermediate ring 7 are designed to form a substantially closed chamber for housing elastic device 9.

As shown in Figure 2, hub 4 comprises a tubular portion 10 designed to fix to a supporting structure of a cable transportation system (not shown); and a guide 11 projecting radially outwards from tubular portion 10, and which, in the example shown, is defined by two facing annular walls 12 substantially perpendicular to axis of rotation A.

Preferably, one of annular walls 12 is integral with tubular portion 10, and the other is fitted removably to tubular portion 10.

Annular walls 12, tubular portion 10, and intermediate ring 7 together define the chamber housing elastic device 9, which, in the embodiment shown, is enclosed between annular walls 12 and so protected to a certain extent from external agents.

Intermediate ring 7 comprises a sliding member 13 which slides along guide 11, and which, in the example shown, is an annular projection on intermediate ring 7, located between the two annular walls 12 and for opposing any axial movement of intermediate ring 7 with respect to hub 4. Annular walls 12 also serve to limit radial movement of intermediate ring 7 with respect to hub 4, and so are positioned with their free ends facing intermediate ring 7 radially.

Race 6 is defined by two lateral walls 14 of outer ring 5, and by a ring 15 of elastomer material enclosed between lateral walls 14.

In actual use, haul cable 2 contacts support roller 1 at a hypothetical point P along ring 15 of elastomer material. And, as shown in Figure 1, elastic device 9 is designed to oppose movement in radial direction D through contact point P and axis of rotation A.

Outer ring 5 can therefore rotate about axis of rotation A, and also move slightly in radial direction D to reduce shock between haul cable 2 and hub 4 and, therefore, noise.

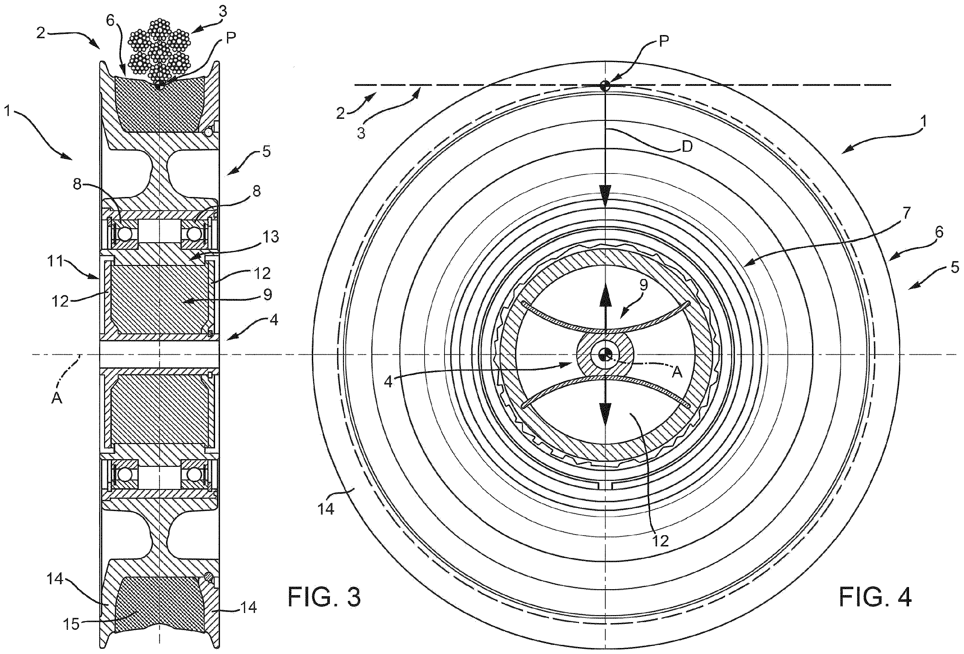

In the Figure 3 embodiment, as opposed to helical springs, elastic device 9 comprises leaf springs - in the example shown, two leaf springs located between hub 4 and the intermediate ring, and preferably facing each other on opposite sides of hub 4 to operate in opposite directions (when one spring is loaded, the other is released). More specifically, the leaf springs are positioned contacting tubular portion 10 of hub 4, and each have two ends contacting intermediate ring 7, and a central portion contacting hub 4.

In the Figure 4 variation, elastic device 9 is defined by an annular block of elastomer material interposed between hub 4 and intermediate ring 7.

In other alternative solutions, the elastic device comprises a spiral spring; one or more blocks of elastomer material; a combination of helical springs and blocks of elastomer material; and a combination of blocks of elastomer material and a spiral spring.

The present invention obviously also extends to equivalent embodiments and to embodiments not described in detail herein, but still within the protective scope of the accompanying Claims.

## Claims

1. A support roller for a cable transportation system haul cable, wherein the support roller (1) comprises a hub (4) extending about an axis of rotation (A); an outer ring (5) extending about the hub (4) and having a race (6) for guiding the haul cable (2), wherein the race (6) is defined by two lateral walls (14) of outer ring (5), and by a ring (15) of elastomer material enclosed between lateral walls (14); and an intermediate ring (7); and wherein the intermediate ring (7) is connected to the outer ring (5) and the hub (4) to allow the outer ring (5) to rotate about the hub (4) and the axis of rotation (A), and to allow the outer ring (5) to move radially with respect to the hub (4) in at least one radial direction (D), wherein the outer ring (5) is connected in rotary manner to the intermediate ring (7), preferably by means of at least one bearing (8); and the intermediate ring (7) is connected to the hub (4) to slide in the radial direction (D).

2. A support roller as claimed in Claim 1, and comprising at least one elastic device (9) located between the hub (4) and the intermediate ring (7) to oppose movement of the outer ring (5), induced by the haul cable (2), in the radial direction (D).

3. A support roller as claimed in Claim 2, wherein the hub (4) and the intermediate ring (7) define a substantially closed chamber; said elastic device (9) being housed inside said chamber.

4. A support roller as claimed in Claim 2 or 3, wherein the elastic device (9) comprises at least one helical spring extending in a radial direction (D) with respect to the axis of rotation (A); the elastic device (9) preferably comprising a plurality of helical springs equally spaced about the axis of rotation (A).

5. A support roller as claimed in Claim 2 or 3, wherein the elastic device (9) comprises at least one leaf spring positioned crosswise to a radial direction (D) with respect to the axis of rotation (A); the elastic device (9) preferably comprising two leaf springs on opposite sides of the hub (4).

6. A support roller as claimed in Claim 2 or 3, wherein the elastic device (9) comprises at least one block of elastomer material; the elastic device (9) preferably comprising one annular block of elastomer material.

7. A support roller as claimed in any one of the foregoing Claims, wherein the hub (4) comprises a guide (11), and the intermediate ring (7) comprises a sliding member (13) which slides along said guide (11).

8. A support roller as claimed in Claim 7, wherein said guide (11) comprises two facing annular walls (12).

9. A support roller as claimed in Claim 7, wherein said sliding member (13) comprises an annular body integral with the intermediate ring (7), and which extends between the annular walls (12).

10. A support roller as claimed in Claim 7, wherein the free ends of the annular walls (12) are located close to the intermediate ring (7) in a radial direction (D), to prevent excessive radial movement.

## Patentansprüche

1. Stütz- bzw. Trägerrolle für ein Kabeltransportsystem-Zugseil, wobei die Stützrolle (1) eine Nabe (4), die sich um eine Rotationsachse (A) erstreckt; einen Außenring (5), der sich um die Nabe (4) erstreckt und einen Laufring (6) zum Führen des Zugseils (2) aufweist, wobei der Laufring (6) durch zwei laterale Wände (14) des Außenrings (5) und durch einen Ring (15) aus Elastomermaterial definiert ist, der zwischen den lateralen Wänden (14) eingeschlossen ist; und einen Zwischenring (7) umfasst; und wobei der Zwischenring (7) mit dem Außenring (5) und der Nabe (4) verbunden ist, um dem Außenring (5) zu erlauben, sich um die Nabe (4) und die Rotationsachse (A) zu drehen, und um dem Außenring (5) zu erlauben, sich in Bezug auf die Nabe (4) in zumindest einer radialen Richtung (D) radial zu bewegen, wobei der Außenring (5) auf drehbare Weise mit dem Zwischenring (7) vorzugsweise mittels zumindest eines Lagers (8) verbunden ist; und wobei der Zwischenring (7) mit der Nabe (4) verbunden ist, um in der radialen Richtung (D) zu gleiten.

2. Stützrolle nach Anspruch 1, umfassend zumindest eine elastische Vorrichtung (9), die sich zwischen der Nabe (4) und dem Zwischenring (7) befindet, um einer durch das Zugseil (2) induzierten Bewegung des Außenrings (5) in der radialen Richtung (D) entgegenzuwirken.

3. Stützrolle nach Anspruch 2, wobei die Nabe (4) und der Zwischenring (7) eine im Wesentlichen geschlossene Kammer definieren; wobei die elastische Vorrichtung (9) innerhalb der Kammer untergebracht ist.

4. Stützrolle nach Anspruch 2 oder 3, wobei die elastische Vorrichtung (9) zumindest eine Schraubenfeder umfasst, die sich in einer radialen Richtung (D) in Bezug auf die Rotationsachse (A) erstreckt; wobei die elastische Vorrichtung (9) vorzugsweise eine Mehrzahl von Schraubenfedern umfasst, die gleichmäßig um die Rotationsachse (A) beabstandet sind.

5. Stützrolle nach Anspruch 2 oder 3, wobei die elastische Vorrichtung (9) zumindest eine Blattfeder umfasst, die quer zu einer radialen Richtung (D) in Bezug auf die Rotationsachse (A) positioniert ist; wobei die elastische Vorrichtung (9) vorzugsweise zwei Blattfedern auf gegenüberliegenden bzw. entgegengesetzten Seiten der Nabe (4) umfasst.

6. Stützrolle nach Anspruch 2 oder 3, wobei die elastische Vorrichtung (9) zumindest einen Block aus Elastomermaterial umfasst; wobei die elastische Vorrichtung (9) vorzugsweise einen ringförmigen Block aus Elastomermaterial umfasst.

7. Stützrolle nach einem der vorhergehenden Ansprüche, wobei die Nabe (4) eine Führung (11) umfasst und der Zwischenring (7) ein Gleitglied (13) umfasst, das entlang der Führung (11) gleitet.

8. Stützrolle nach Anspruch 7, wobei die Führung (11) zwei zugewandte ringförmige Wände (12) umfasst.

9. Stützrolle nach Anspruch 7, wobei das Gleitglied (13) einen ringförmigen Körper umfasst, der integral mit dem Zwischenring (7) ist und sich zwischen den ringförmigen Wänden (12) erstreckt.

10. Stützrolle nach Anspruch 7, wobei sich die freien Enden der ringförmigen Wände (12) nahe an dem Zwischenring (7) in einer radialen Richtung (D) befinden, um eine übermäßige radiale Bewegung zu verhindern.

## Revendications

1. Rouleau de support pour câble tracteur d'un système de transport par câble, dans lequel le rouleau de support (1) comprend un moyeu (4) s'étendant autour d'un axe de rotation (A) ; une bague extérieure (5) s'étendant autour du moyeu (4) et ayant un chemin de roulement (6) pour guider le câble tracteur (2), dans lequel le chemin de roulement (6) est défini par deux parois latérales (14) de la bague extérieure (5), et par une bague (15) en matériau élastomère enfermée entre les parois latérales (14) ; et une bague intermédiaire (7) ; et dans lequel la bague intermédiaire (7) est reliée à la bague extérieure (5) et au moyeu (4) pour permettre à la bague extérieure (5) de tourner autour du moyeu (4) et de l'axe de rotation (A), et pour permettre à la bague extérieure (5) de se déplacer radialement par rapport au moyeu (4) dans au moins une direction radiale (D), dans lequel la bague extérieure (5) est reliée de manière rotative à la bague intermédiaire (7), de préférence au moyen d'au moins un roulement (8) ; et la bague intermédiaire (7) est reliée au moyeu (4) pour coulisser dans la direction radiale (D).

2. Rouleau de support selon la revendication 1, et comprenant au moins un dispositif élastique (9) situé entre le moyeu (4) et la bague intermédiaire (7) pour s'opposer au mouvement de la bague extérieure (5), induit par le câble tracteur (2), dans la direction radiale (D).

3. Rouleau de support selon la revendication 2, dans lequel le moyeu (4) et la bague intermédiaire (7) définissent une chambre sensiblement fermée ; ledit dispositif élastique (9) étant logé à l'intérieur de ladite chambre.

4. Rouleau de support selon la revendication 2 ou 3, dans lequel le dispositif élastique (9) comprend au moins un ressort hélicoïdal s'étendant dans une direction radiale (D) par rapport à l'axe de rotation (A) ; le dispositif élastique (9) comprenant de préférence une pluralité de ressorts hélicoïdaux espacés de manière égale autour de l'axe de rotation (A).

5. Rouleau de support selon la revendication 2 ou 3, dans lequel le dispositif élastique (9) comprend au moins un ressort à lame positionné transversalement à une direction radiale (D) par rapport à l'axe de rotation (A) ; le dispositif élastique (9) comprenant de préférence deux ressorts à lame sur des côtés opposés du moyeu (4).

6. Rouleau de support selon la revendication 2 ou 3, dans lequel le dispositif élastique (9) comprend au moins un bloc de matériau élastomère ; le dispositif élastique (9) comprenant de préférence un bloc annulaire de matériau élastomère.

7. Rouleau de support selon l'une quelconque des revendications précédentes, dans lequel le moyeu (4) comprend un guide (11), et la bague intermédiaire (7) comprend un élément coulissant (13) qui coulisse le long dudit guide (11).

8. Rouleau de support selon la revendication 7, dans lequel ledit guide (11) comprend deux parois annulaires (12) se faisant face.

9. Rouleau de support selon la revendication 7, dans lequel ledit élément coulissant (13) comprend un corps annulaire solidaire de la bague intermédiaire (7), et qui s'étend entre les parois annulaires (12).

10. Rouleau de support selon la revendication 7, dans lequel les extrémités libres des parois annulaires (12) sont situées à proximité de la bague intermédiaire (7) dans une direction radiale (D), pour empêcher un mouvement radial excessif.
